(19) Europäisches Patentamt / European Patent Office / Office européen des brevets

(11) **EP 1 939 227 B1**

(12) **EUROPEAN PATENT SPECIFICATION**

(45) Date of publication and mention
of the grant of the patent:
**30.10.2013 Bulletin 2013/44**

(51) Int Cl.:
*C08F 4/651* (2006.01)   *C08F 10/00* (2006.01)

(21) Application number: **06027029.5**

(22) Date of filing: **28.12.2006**

(54) **Catalyst preparation with phosphorous compound**

Katalysatorherstellung mit Phosphorverbindung

Préparation de catalyseur en présence de composé de phosphore

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**02.07.2008 Bulletin 2008/27**

(73) Proprietor: **Borealis Technology Oy**
**06101 Porvoo (FI)**

(72) Inventors:
• **Haikarainen, Anssi**
**04300 Tuusula (FI)**
• **Denifl, Peter**
**00990 Helsinki (FI)**
• **Leinonen, Timo**
**06750, Tolkkinen (FI)**

(74) Representative: **Grünecker, Kinkeldey,**
**Stockmair & Schwanhäusser**
**Leopoldstrasse 4**
**80802 München (DE)**

(56) References cited:
**EP-A1- 1 273 595    WO-A-01/32718**
**WO-A-03/000746    US-A1- 2001 018 501**
**US-H- 2 060**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to a process for preparing a particulate olefin polymerization catalyst component, particularly one comprising a Group 2 metal.

**Background of the invention**

Ziegler-Natta (ZN) type polyolefin catalysts are well known in the field of polymers, generally, they comprise (a) at least a catalyst component formed from a transition metal compound of Group 4 to 6 of the Periodic Table (IUPAC, Nomenclature of Inorganic Chemistry, 1989), a metal compound of Group 1 to 3 of the Periodic Table (IUPAC), and, optionally, a compound of group 13 of the Periodic Table (IUPAC) and/or an internal donor compound. ZN catalyst may also comprise (b) further catalyst component(s), such as a cocatalyst and/or an external donor.

Various methods for preparing ZN catalysts are known in the state of art. In one known method, a supported ZN catalyst system is prepared by impregnating the catalyst components on a particulate support material. In WO-A-01 55 230, the catalyst component(s) are supported on a porous, inorganic or organic particulate carrier material, such as silica.

In a further well known method the carrier material is based on one of the catalyst components, e.g. on a magnesium compound, such as $MgCl_2$. This type of carrier material can also be formed in various ways. EP-A-713 886 of Japan Olefins describes the formation of $MgCl_2$ adduct with an alcohol which  is then emulsified and finally the resultant mixture is quenched to cause the solidification of the droplets.

Alternatively, EP-A-856 013 of BP discloses the formation of a solid Mg-based carrier, wherein the Mg-component containing phase is dispersed to a continuous phase and the dispersed Mg-phase is solidified by adding the two-phase mixture to a liquid hydrocarbon.

The formed solid carrier particles are normally treated with a transition metal compound and optionally with other compounds for forming the active catalyst.

Accordingly, in case of external carriers, some examples of which are disclosed above, the morphology of the carrier is one of the defining factors for the morphology of the final catalyst.

One disadvantage encountered with the supported catalyst systems is that a possible surface treatment (impregnation step) of the support with one or more catalytically active compounds may lead to non-uniform distribution of the active component(s) and in turn to an inhomogeneous polymer material.

WO-A-00 08073 and WO-A-00 08074 describe further methods for producing a solid ZN-catalyst, wherein a solution of a Mg-based compound and one or more further catalyst compounds are formed and the reaction product thereof is precipitated out of the solution by heating the system. Furthermore, EP-A-926 165 discloses another precipitating method, wherein a mixture of $MgCl_2$ and Mg-alkoxide is precipitated together with a Ti-compound to give a ZN catalyst.

EP-A-83 074 and EP-A-83 073 of Montedison disclose methods for producing a ZN catalyst or a precursor thereof, wherein an emulsion or dispersion of Mg and/or Ti compound is formed in an inert liquid medium or inert gas phase and said system is reacted with an Al-alkyl compound to precipitate a solid catalyst. According to examples said emulsion is then added to a larger volume of Al-compound in hexane and prepolymerised to cause the precipitation.

In general, a drawback of such precipitation methods is the difficulty to control the precipitation step and thus the morphology of the precipitating catalyst particles.

Furthermore, the precipitation of the catalyst component(s) may often proceed via a "tar-like" intermediate stage. Said undesired sticky precipitate agglomerates easily and sticks to the walls of the reactor. The morphology of the catalyst would then of course be lost.

WO 03/000757 describes a process for the preparation of an olefin polymerization catalyst component, enabling to prepare solid particles of a catalyst component comprising a group 2 metal together with a transition metal.

WO 2004/029112 discloses a further process for preparing an olefin polymerization catalyst component, wherein the process is further characterized in that a specific aluminum alkyl compound is brought into contact with the catalyst component, enabling a certain degree of activity increase at higher temperatures.

The catalysts according to these two documents are prepared according to a emulsion/solidification process.

US 5, 413, 979 describes a further method for the preparation of a solid procatalyst composition wherein support materials are  impregnated with catalyst component precursors in order to obtain a catalyst component.

US 4, 294, 948 finally discloses a process for preparing an olefin polymer or copolymer, employing a solid titanium catalyst component prepared by treating pulverized catalyst precursors with organo metallic compounds of a metal of any of groups I or III of the Periodic Table, characterized in that the catalyst preparation occurs using pulverized, solid and particulate precursor materials.

US 6, 767, 857 B1 describes the formation of a pre-catalyst by reacting butylethylmagnesium with an alcohol, followed by contacting with a phosphorous compound, such as tri-butyl phosphate. The resulting mixture is precipitated

using for example $TiCl_4$ in order to produce a $MgCl_2$ support for a polymerisation catalyst. Polymers produced with the support as described are disclosed as having a broad molecular weight distribution of from 6 to 10.

WO 01/32718 A discloses a ZN catalyst for the polymerization of propylene.

For typical ZN catalyst systems it is known that the control of the molecular weight distribution (MWD), in particular if narrow MWD polymers are desired is difficult to accomplish, so that for typical narrow MWD polyolefin materials single site catalysts (SSC) are used. It would however by a great advantage if also ZN catalysts would be available allowing a control of MWD, in particular without sacrificing polymerisation activity.

Accordingly, although much development work has been done in the field of Ziegler-Natta catalysts, there remains a need for alternative or improved methods of producing ZN catalysts with desirable properties.

It is of particular interest to obtain a catalyst in particulate form which results in good and desired polymer properties, and enables the control of MWD, and possibly also further polymer properties, such as content of xylene solubles (XS). I.e. the object of the invention is to provide a catalyst component, yielding a catalyst having a high activity enabling the production of polymers with narrow MWD as defined herein, and preferably allowing also a control of the XS.

## Description of the invention

In view of the drawbacks of the prior art and the object identified above the present invention provides the subject matter as defined in claim 1 to 28.

It has been surprisingly found by the inventors of the present invention that catalyst particles having a good morphology, size and uniform particle size distribution can be obtained by the way of preparing Ziegler-Natta (ZN) type catalysts, for use in olefin polymerization, in particular for propylene polymerisation, identified in the prior art cited above, showing furthermore an increase of the control of molecular weight distribution. The produced catalyst components according to the invention have excellent morphology, good particle size distribution and yield polymerisation catalysts having a fully satisfactory activity and allowing the desired control of the MWD. According to the replica effect, the polymer particles produced by using the inventive catalyst have very good morphological properties, too. The inventive catalyst preparation is based on a liquid/liquid two-phase system where no separate external carrier materials such as silica or $MgCl_2$ are needed in order to get solid catalyst particles.

The present invention is therefore directed to a process for preparing an olefin polymerization catalyst component in the form of particles having a predetermined size range as defined in claim 1, said process comprising the steps of:

a) preparing a solution of a complex of a Group 2 metal and an electron donor by reacting a compound of said metal with said electron donor or a precursor thereof in an organic liquid reaction medium;
b) adding said solution of said complex to at least one compound of a transition metal to produce an emulsion the dispersed phase of which contains more than 50 mol% of the Group 2 metal in said complex;
c) agitating the emulsion in order to maintain the droplets of said dispersed phase within an average size range of 5 to $200\mu m$;
d) solidifying said droplets of the dispersed phase;
e) recovering the solidified particles of the olefin polymerization catalyst component;

wherein a phosphorous compound is added and brought into contact with the droplets of the dispersed phase of the agitated emulsion or the solidified particles before recovering the solidified particles in step e).

Polymerization processes, where the catalysts of the invention are useful comprise at least one polymerization stage. Typically the polymerization process comprises additional polymerization stages or reactors. In one particular embodiment the process contains at least one bulk reactor zone and at least one gas phase reactor zone, each zones comprising at least one reactor and all reactors being arranged in cascade. In one particularly preferred embodiment the polymerization process for polymerizing olefins, in particular propylene optionally with comonomers, like ethylene or other $\alpha$-olefins, comprises at least one bulk reactor and at least one gas phase reactor arranged in that order. In some preferred processes the process comprises one bulk reactor and at least two gas phase reactors. The process may further comprise pre- and post reactors. Prereactors comprise typically prepolymerisation reactors.

The inventors surprisingly found that by adding a small amount of a phosphorous compound as defined in claim 1, during the preparation of the catalyst component as described in claim 1, preferably to the magnesium complex, the liquid/liquid two-phase system during the catalyst component preparation prior to solidification, or to the washing liquid if such a washing step is conducted prior to the recovery of the catalyst component, a catalyst component is obtained yielding a polymerisation catalyst having a clearly improved ability to control MWD. In addition in some embodiments also the XS content can be controlled while not sacrificing polymerisation activity, without destroying the excellent catalyst morphology or, subsequently, polymer morphology. In addition the phosphorous content in the final catalyst is very low and in most cases below the detection limit, so that no further impurities are introduced into the polymer produced using the catalyst component of the present invention.

According to the results obtained by the inventors there seem to be three variables, which effect on the results, namely;

- the adding step of P-compound
- the amount of P-compound
- the type of P-compound.

According to the findings of the inventors it appears to be preferable to add the phosphorous compound before the particle formation has been completed, or after completion of particle formation. Accordingly, the addition of the phosphorous compound may be effected from step a) until the completion of the particle formation, i.e. step d), or thereafter, for example in a subsequent washing step to be carried out after step d) but prior to step e). The completion of the particle formation is usually achieved when the remaining toluene-soluble components have been washed out from the catalyst particles during solidifying said particles. Thus, the phosphorous compound can be preferably added, in pure form or in the form of a solution, from the beginning of the formation of the solution according to step a) until adding it to the washing liquid, mostly toluene. It is in particular preferred to add the phosphorous compound to the washing liquid.

The addition amount of the phosphorous compound is typically selected so that a molar ratio of Group 2 metal and phosphorous is within the range of 0.05 to 1, preferably 0.1 to 0.5, more preferably 0.1 to 0.3, and most preferably 0.15 to 0.25, such as about 0.2.

The inventors have surprisingly found, however, that the amount of the final P content in the catalyst component is very small, and below the detection limit. However, in some embodiments small amounts of P can be detected in the final catalyst component, and the amount of P may be 0.8 wt.-% or less, preferably 0.6 wt.-% or less, more preferably 0.4 wt.-% or less.

The phosphorous compound to be used in accordance with the present invention typically is a compound comprising phosphorous in the oxidation state of +5 or +3, preferably +5.

Suitable examples of phosphorous compounds of the oxidation state of phosphorous of +3 are phosphines, such as tri-alkyl or tri-aryl phosphines, such as tri-phenyl phosphine. Preferred however are, as indicated above, are phosphorous compounds comprising phosphorous in the oxidation state +5. Particular examples thereof are compounds of the formula $O=P(R)_3$ wherein the three residues R may be identical or different and may be selected among halogens, including Cl, Br, and I, preferably Cl, alkyls, alkenyls, aryls, phenyls with 1 to 20 C-atoms, preferably 1 to 16, more preferably 1 to 12 C-atoms, wherein the groups optionally may be substituted once or twice, preferably with any of the groups identified above. Still more preferably R are alkyls with 1 to 16 C-atoms, preferably 1 to 12, more preferably 1 to 8 C-atoms or Cl, and a particular example is $O=PCl_3$ which may be suitably used in particular when wishing to add the phosphorous compound already in step a) or b). Another group of particular examples thereof are compounds of the formula $O=P(OR)_3$ wherein the three residues R may be identical or different and may be selected among alkyls, alkenyls, aryls, phenyls with 1 to 20 C-atoms, preferably 1 to 16, more preferably 1 to 12 C-atoms, wherein the groups optionally may be substituted once or twice, preferably with any of the groups identified above and halogens, including Cl, Br, and I. Still more preferably R are alkyls with 1 to 16 C-atoms, preferably 1 to 12, more preferably 1 to 8 C-atoms, and Alkyls with 2 to 6 C-atoms are especially useful, such as tributyl phosphate.

The inventors found out that the phosphorous compounds to be used in the present invention as defined in claim 1 surprisingly enable a control of the MWD and in embodiments also of XS. Typically the catalyst component of the present invention enables the preparation of narrow MWD polymers, such as polymers with a MWD of below 4, although a ZN catalst system is employed for polymerisation. The present invention enables the preparation of polymers with MWD values of as low as 3.9 or below, even below 3.7, such as from 3.3 to 3.5. It is even possible to achieve a MWD as low as 3.0 by using the catalyst component and catalyst according to the present invention. Polymers prepared under identical conditions, and with the same catalysts, i.e. solid catalysts without any external carrier, however with the exception of the phosphorous compound addition for the present invention, display MWD values typically being at least 10 to 15 % higher, and typically 4 or more. Conventional supported ZN catalysts produce polypropylene having a MWD close to 5 or above. It has to be noted that the possibility to narrow the MWD from 4 to e.g. 3.7 or lower by using a ZN catalyst is remarkable and gives beneficial possibilities to control polymer properties. Further the catalyst component prepared in accordance with the present invention in embodiments also allows a control of XS, typically a decrease of XS, compared with polymerisations under identical conditions with the exception of the phosphorous compound addition for the present invention.

The new inventive method can be easily scaled up in order to avoid common up-scaling problems in the prior art which led to unsatisfied catalyst morphology and particle size distribution as well as reduced activity at higher temperature.

Preferably, the inventive process further comprises washing and drying said recovered solidified particles to obtain said catalyst component in a purified form.

The Group 2 metal used in step a) of the inventive process is preferably magnesium, and the liquid organic medium comprises preferably a $C_6$-$C_{10}$ aromatic hydrocarbon, preferably toluene.

As electron donor compound to be reacted with the Group 2 metal compound is preferably a mono- or diester of an aromatic carboxylic acid or diacid, the latter being able to form a chelate-like structured complex. Said aromatic carboxylic acid ester or diester can be formed in situ by reaction of an aromatic carboxylic acid chloride or diacid dichloride with a $C_2$-$C_{16}$ alkanol and/or diol, and is preferable dioctyl phthalate.

The reaction for the preparation of the Group 2 metal complex is generally carried out at a temperature of 20° to 80°C, and in case that the Group 2 metal is magnesium, the preparation of the magnesium complex is carried out at a temperature of 50° to 70°C.

The compound of a transition metal is preferably a compound of a Group 4 metal. The Group 4 metal is preferably titanium, and its compound to be reacted with the complex of a Group 2 is preferably a halide.

In a further embodiment of the invention, a compound of a transition metal used in the process can also contain organic ligands typically used in the field known as a single site catalyst.

In addition, during the catalyst component preparation a compound of Group 13, preferably a compound of aluminium having a general formula $AlR_{3-n}X_n$, wherein R stands for a straight chain or branched alkyl or alkoxy group having 1 to 20, preferably 1 to 10 and more preferably 1 to 6 carbon atoms, X independently represents a residue selected from the group of halogen, preferably chloride, and alkyl and n stands for 0, 1, 2 or 3, is added to the catalyst component synthesis and brought it into contact with the droplets of the dispersed phase of the agitated emulsion before recovering the solidified particles in step e). I.e. the Al compound can be added at any step a) to d), or during the washing step after d), however, before the final recovery step e). Reference is made to WO 2004/029112 and to unpublished EP patent application 06011312.3.

In a still further embodiment of the invention, a compound of a transition metal can also be selected from Group 5 metals, Group 6 metals, Cu, Fe, Co, Ni and/or Pd compounds.

The complex of the Group 2 metal is preferably a magnesium complex. The invention will henceforth be described in relation to a preferred embodiment of the process, namely to a process for the preparation of a Ziegler-Natta type catalyst.

In a preferred embodiment, the present invention is directed to a process for producing catalyst components of the Ziegler-Natta type in the form of particles having a predetermined size range, said process comprising: preparing a solution of magnesium complex by reacting an alkoxy magnesium compound and an electron donor or precursor thereof in a $C_6$-$C_{10}$ aromatic liquid reaction medium; reacting said magnesium complex with a compound of at least one four-valent Group 4 metal at a temperature greater than 10°C and less than 60°C to produce an emulsion of a denser, $TiCl_4$/toluene-insoluble, oil dispersed phase having, Group 4 metal/Mg mol ratio 0.1 to 10 in an oil disperse phase having Group 4 metal/Mg mol ratio 10 to 100; agitating the emulsion, optionally in the presence of an emulsion stabilizer and or a turbulence minimizing agent, in order to maintain the droplets of said dispersed phase within an average size range of 5 to 200 $\mu$m. The catalyst particles are obtained after solidifying said particles of the dispersed phase e.g. by heating.

The optional A1 compound is added before the final recovery, preferably during the washing step.

The said disperse and dispersed phases are thus distinguishable from one another by the fact that the denser oil, if contacted with a solution of titanium tetrachloride in toluene, will not dissolve in it. A suitable solution for establishing this criterion would be one having a toluene mol ratio of 0.1 to 0.3. They are also distinguishable by the fact that the great preponderance of the Mg provided (as complex) for the reaction with the Group 4 metal compound is present in the dispersed phase, as revealed by comparison of the respective Group 4 metal/Mg mol ratios.

In effect, therefore, virtually the entirety of the reaction product of the Mg complex with the Group 4 metal- which is the precursor of the ultimate catalyst component- becomes the dispersed phase, and proceeds through the further processing steps to the final particulate form. The disperse phase, still containing a useful quantity of Group 4 metal, can be reprocessed for recovery of that metal.

The production of a two-phase, rather than single-phase (as in prior practice) reaction product is encouraged by carrying out the Mg complex/Group 4 metal compound reaction at low temperature, specifically above 10°C but below 60°C, preferably between above 20°C and below 50°C. Since the two phases will naturally tend to separate into a lower, denser phase and supernatant lighter phase, it is necessary to maintain the reaction product as an emulsion by agitation, preferably in the presence of an emulsion stabiliser.

The resulting particles from the dispersed phase of the emulsion are of a size, morphology (spherical shape) and uniformity which render the ultimate catalyst component extremely effective in olefin polymerization. This morphology is preserved during the heating to solidify the particles, and of course throughout the final washing and optional drying steps. It is, by contrast, difficult to the point of impossibility to achieve such morphology through precipitation, because of the fundamental uncontrollability of nucleation and growth, and the large number of variables which affect these events.

The electron donor is preferably an aromatic carboxylic acid ester, a typicall ester being dioctyl phthalate. The donor may conveniently be formed in situ by reaction of an aromatic carboxylic acid chloride precursor with a $C_2$-$C_{16}$ alkanol and/or diol. The liquid reaction medium preferably comprises toluene.

Furthermore, emulsifying agents/emulsion stabilisers can be used additionally in a manner known in the art for facilitating the formation and/or stability of the emulsion. For the said purposes e.g. surfactants, e.g. a class based on acrylic or methacrylic polymers can be used. Preferably, said emulsion stabilizers are acrylic or methacrylic polymers, in particular those with medium sized ester side chains having more than 10, preferably more than 12 carbon atoms and preferably less than 30, and preferably 12 to 20 carbon atoms in the ester side chain. Particular preferred are unbranched $C_{12}$ to $C_{20}$ acrylates such as poly(hexadecyl)-methacrylate and poly(octadecyl)-methacrylate.

Furthermore, in some embodiments a turbulence minimizing agent (TMA) can be added to the reaction mixture in order to improve the emulsion formation and maintain the emulsion structure. By using said TMA, catalyst component particles can be obtained, said particles having very narrow size distribution.

Preferably, the TMA is added to the reaction mixture when the emulsion is formed, however in any case before solidification of the droplets of the dispersed phase starts in order to make sure that a quite uniform particle size distribution can be obtained.

Said TMA agent has to be inert and soluble in the reaction mixture under the reaction conditions, which means that polymers without polar groups are preferred.

Accordingly, said TMA or mixtures thereof are preferred as polymers having linear aliphatic carbon backbone chains, which might be branched with short side chains only in order to serve for uniform flow conditions when stirring. Said TMA is in particular preferably selected from $\alpha$-olefin polymers of $\alpha$-olefin monomers with 6 to 20 carbon atoms, like polyoctene, polynonene, polydecene, polyundecene or polydodecene or mixtures thereof, having the molecular weight and general backbone structure as defined before. Most preferable it is polydecene.

TMA can added to the emulsion in an amount of e.g. 1 to 1.000 ppm, preferably 5 to 100 ppm and more preferable 5 to 50 ppm, based on the total weight of the reaction mixture.

It has been found that the best results are obtained when the Group 4 metal/Mg mol ratio of the denser oil is 1 to 5, preferably 2 to 4, and that of the disperse phase oil is 55 to 65. Generally the ratio of the mol ratio Group 4 metal/Mg in the disperse phase oil to that in the denser oil is at least 10.

The optional A1 compound is added in such an amount that the final catalyst component particles have A1 content of 0, 0 to 1 wt-%, preferably 0, 1 to 0, 8 wt-% or 0, 02 to 0, 5 wt-%. The preferred amounts depend to some extent on the A1 compound, e.g. if an A1 alkoxy compound is used, the preferred final A1 amounts seem to be lower that if e.g. A1 alkyl chloride compounds are used.

Solidification of the dispersed phase droplets by heating is suitably carried out at a temperature of 70-150°C, usually at 80-110°C, preferably at 90-110°C .

The finally obtained catalyst component is desirably in the form of particles having generally an average size range of 5 to 200 $\mu$m, preferably 10 to 100, more preferably 20 to 50 $\mu$m.

The present invention further comprehends an olefin polymerization catalyst comprising a catalyst component prepared as aforesaid, in association with an alkyl aluminium cocatalyst and optionally external donors, typically silane based donors, and the use of that polymerization catalyst for the polymerization Of $C_2$ to $C_{10}$-olefins.

This use enables the formation of polymers with narrow MWD despite the use of ZN catalysts. MWD values which may be achieved using the novel and inventive catalyst component of the present invention are values of 4 or less, preferably 3.8 or less, and more preferably 3.6 or less. In particular the present invention enables the preparation of polymers possessing such low MWD values when polymerising propylene, alone or together with comonomers such as ethylene or higher olefins with from 4 to 10 carbon atoms.

The reagents can be added to the aromatic reaction medium in any order. However it is preferred that in a first step the alkoxy magnesium compound is reacted with a carboxylic acid halide precursor of the electron donor to form an intermediate; and in a second step the obtained product is further reacted with the Group 4 metal. The magnesium compound preferably contains from 1 to 20 carbon atoms per alkoxy group, and the carboxylic acid should contain at least 8 carbon atoms.

Reaction of the magnesium compound, carboxylic acid halide and polyhydric alcohol proceeds satisfactorily at temperatures in the range 20 to 80°C, preferably 50 to 70°C. The product of that reaction, the "Mg complex", is however reacted with the Group 4 metal compound at a lower temperature, contrary to previous practice, to bring about the formation of a two-phase, oil-in-oil, product.

Use of an aromatic medium for preparation of the Mg complex contributes to consistent product morphology and higher bulk density. Catalyst bulk density and morphology correlate with polymer product bulk density and morphology according to the so-called "replication effect".

The technique adopted in the novel regimen of the invention is inherently more precise than that formerly employed, and thus further contributes to product consistency, as well as sharply reducing the volumes of solvent to be handled and thus improving process economics.

The reaction medium used as solvent can be aromatic or a mixture of aromatic and aliphatic hydrocarbons, the latter one containing preferably 5- 9 carbon atoms, more preferably 5- 7 carbon atoms, or mixtures thereof. Preferably, the liquid reaction medium used as solvent in the reaction is aromatic and is more preferably selected from hydrocarbons such as substituted and unsubstituted benzenes, preferably from alkylated benzenes, even more preferably from toluene and the xylenes, and is most preferably toluene. The molar ratio of said aromatic medium to magnesium is preferably less than 10, for instance from 4 to 10, preferably from 5 to 9.

The recovered particulate product is washed at least once, preferably at least twice, most preferably at least three times with a hydrocarbon, which preferably is selected from aromatic and aliphatic hydrocarbons, preferably with toluene, particularly with hot (e.g. 80 to 100°C) toluene, which might include a smaller or higher amount of $TiCl_4$ in it. The amount of $TiCl_4$ can vary from a few vol-% to more than 50 vol-%, such as from 5 vol-% to 50 vol-%, preferably up to 30 vol-% and more preferably from 5 to 15 vol-%. It is also possible that at least one wash is done with 100 vol-% $TiCl_4$. One or several further washes after aromatic and/ or $TiCl_4$ washes can be run with aliphatic hydrocarbons of 4 to 8 carbon atoms. Preferable these latter washings are performed with heptane and/or pentane. Washings can be done with hot (e.g. 90°C) or cold (room temperature) hydrocarbons or combinations thereof. It is also possible that all washings will be done with the same solvent, e.g. toluene. According to the one preferred embodiment of the present invention the aluminium alkoxy compound to be used in the catalyst component preparation of the invention can be added to any of the washing mediums, however preferably not to the last or two last washings.

The washing can be optimized to give a catalyst component with novel and desirable properties. Finally, the washed catalyst component is recovered. It can further be dried, as by evaporation or flushing with nitrogen, or it can be slurried to an oily liquid without any drying step.

It is preferable that the intermediates as well as the final product of the process be distinct compounds with an essentially stoichiometric composition. Often, they are complexes. A complex is, according to Römpps Chemie-Lexicon, 7. Edition, Franckh'sche Verlagshandlung, W. Keller & Co., Stuttgart, 1973, page 1831, "a derived name of compounds of higher order, which originate from the combination of molecules, -unlike compounds of first order, in the creation of which atoms participate".

The alkoxy magnesium compound group is preferably selected from the group consisting of magnesium dialkoxides, complexes of a magnesium dihalide and an alcohol, and complexes of a magnesium dihalide and a magnesium dialkoxide. It may be a reaction product of an alcohol and a magnesium compound selected from the group consisting of dialkyl magnesiums, alkyl magnesium alkoxides, alkyl magnesium halides and magnesium dihalides. It can further be selected from the group consisting of dialkyloxy magnesiums, diaryloxy magnesiums, alkyloxy magnesium halides, aryloxy magnesium halides, alkyl magnesium alkoxides, aryl magnesium alkoxides and alkyl magnesium aryloxides.

The magnesium dialkoxide may be the reaction product of a magnesium dihalide such as magnesium dichloride or a dialkyl magnesium of the formula $R_2Mg$, wherein each one of the two Rs is a similar or different $C_1$-$C_{20}$ alkyl, preferably a similar or different $C_4$-$C_{10}$ alkyl. Typical magnesium alkyls are ethylbutyl magnesium, dibutyl magnesium, dipropyl magnesium, propylbutyl magnesium, dipentyl magnesium, butylpentylmagnesium, butyloctyl magnesium and dioctyl magnesium. Most preferably, one R of the formula $R_2Mg$ is a butyl group and the other R is an octyl group, i.e. the dialkyl magnesium compound is butyl octyl magnesium.

Typical alkyl-alkoxy magnesium compounds RMgOR, when used, are ethyl magnesium butoxide, butyl magnesium pentoxide, octyl magnesium butoxide and octyl magnesium octoxide.

Dialkyl magnesium, alkyl magnesium alkoxide or magnesium dihalide can react with a monohydric alcohol R'OH , or a mixture thereof with a polyhydric alcohol R'(OH) $_m$.

Typical $C_1$-$C_{20}$ monohydric alcohols are methanol, ethanol, n-propanol, iso-propanol, n-butanol, iso-butanol, sec.butanol, tert.butanol, n-amyl alcohol, iso-amyl alcohol, sec.amyl alcohol, tert.amyl alcohol, diethyl carbinol, akt. amyl alcohol, sec. isoamyl alcohol, tert.butyl carbinol. Typical $C_6$-$C_{10}$ monohydric alcohols are hexanol, 2-ethyl-lbutanol, 4-methyl-2-pentanol, 1-heptanol, 2-heptanol, 4-heptanol, 2, 4-dimethyl-3pentanol, 1-octanol, 2-octanol, 2-ethyl-l-hexanol, 1-nonanol, 5-nonanol, dilsobutyl carbinol, 1-decanol and 2, 7-dimethyl-2-octanol. Typical >$C_{10}$ monohydric alcohols are n-1-undecanol, n-1-dodecanol, n-1-tridecanol, n-1-tetradecanol, n-1-pentadecanol, l-hexadecanol, n-1-heptadecanol and n- 1 octadecanol. The monohydric alcohols may be unsaturated, as long as they do not act as catalyst poisons.

Preferable monohydric alcohols are those of formula R'OH in which R' is a $C_2$-$C_{16}$ alkyl group, most preferably a $C_4$-$C_{12}$ alkyl group, particularly 2-ethyl-l-hexanol.

The aromatic reaction medium may also contain a polyalcohol, which may be straight- or branched-chain. Typical $C_2$ to $C_6$ polyhydric alcohols may be straight-chain or branched and include ethylene glycol, propylene glycol, trimethylene glycol, 1, 2-butylene glycol, 1, 3-butylene glycol, 1, 4-butylene glycol, 2, 3-butylene glycol, 1, 5-pentanediol, 1, 6-hexanediol, 1, 8-octanediol, pinacol, diethylene glycol, triethylene glycol, and triols such as glycerol, methylol propane and pentareythritol. The polyhydric alcohol can be selected on the basis of the activity and morphology it, gives the catalyst component.

Preferably, essentially all of the aromatic carboxylic acid ester is a reaction product of a carboxylic acid halide, preferably a dicarboxylic acid dihalide, more preferably an unsaturated $\alpha$, $\beta$-dicarboxylic acid dihalide, most preferably phthalic acid dichloride, with the monohydric alcohol.

The compound of a fourvalent Group 4 metal compound containing a halogen is preferably a titanium tetrahalide.

Equivalent to titanium tetrahalide is the combination of an alkoxy titanium halide and a halogenation agent therefore, which are able to form a titanium tetrahalide in situ. The most preferred halide is the chloride, for zirconium and hafnium as well as for titanium.

The reaction conditions used in the claimed process may be varied according to the used reactants and agents.

As is known, the addition of at least one halogenated hydrocarbon during the process can lead to further improved catalytic activity. Reactive halogenated hydrocarbons preferably have the formula $R'''X'''_n$ wherein $R'''$ is an n-valent $C_1$-$C_{20}$ hydrocarbyl group, particularly a $C_1$-$C_{10}$ paraffin, $X'''$ is a halogen and n is an integer from 1 to 4.

Such chlorinated hydrocarbons include monochloromethane, dichloromethane, trichloromethane (chloroform), tetrachloromethane, monochloroethane, (1, 1) -dichloroethane, (1, 2) -dichloroethane, (1, 1, 1) -trichloroethane, (1, 1, 2) -trichloroethane, (1, 1, 1, 2) -tetrachloroethane, (1, 1, 2, 2) tetrachloroethane, pentachloroethane, hexachloroethane, (1) -chloropropane, (2) -chloropropane, (1, 2) -dichloropropane, (1, 3) -dichloropropane, (1, 2, 3) trichloropropane, (1) -chlorobutane, (2) -chlorobutane, isobutyl chloride, tert.butyl chloride, (1, 4) -dichlorobutane, (1) -chloropentane, (1, 5) -dichloropentane. The chlorinated hydrocarbons may also be unsaturated, provided that the unsaturation does not act as catalyst poison in the final catalyst component.

In the above formula, $R'''$ is preferably a mono-or bivalent $C_1$-$C_{10}$ alkyl group, independently, $X'''$ is preferably chlorine and, independently, n is preferably 1 or 2. Preferred compounds include butyl chloride (BuCl), dichloroalkanes such as (1, 4) -dichlorobutane, and tertiary butyl chloride.

Though the catalyst component preparation according to the inventive method can be carried out batchwise, it is also preferable and possible to prepare the catalyst component semi-continuously or continuously. In such semi-continuous or continuous process, the solution of the complex of the group 2 metal and said electron donor, which is prepared by reacting the compound of said metal with said electron donor in an organic liquid reaction medium, is mixed with at least one compound of a transition metal, which might be solved in the same or different organic liquid reaction medium. The so obtained solution is then agitated, possibly in the presence of an emulsion stabilizer, and then the so-agitated emulsion is fed into a temperature gradient reactor, in which the emulsion is subjected a temperature gradient, thus leading to solidifying the droplets of a dispersed phase of the emulsion. The optional TMA is preferably contained in the solution of the complex or added to the solution before feeding the agitated solution to the temperature gradient reactor.

When feeding said agitated emulsion to the temperature gradient reactor, an inert solvent, in which the droplets are not soluble, can additionally be fed into that gradient reactor in order to improve the droplet formation and thus leading to a uniform grain size of the particles of the catalyst component, which are formed in the temperature gradient reactor when passing through said line. Such additional solvent might be the same as the organic liquid reaction medium, which is used for preparing the solution of the complex of the group 2 metal as explained above in more detail.

The solidified particles of the olefin polymerization catalyst component can subsequently be recovered by an in-stream filtering unit and then, optionally after some additional washing and drying steps in order to remove unreacted starting components, can be stored for further use. In one embodiment the catalyst can be fed after washing steps into the olefin polymerization reactor, so that a continuous preparation and feed to the reactor is guaranteed. It is also possible to mix the solidified and washed catalyst component with an oily fluidic liquid and store and use the catalyst component as a catalyst component-oil slurry. In this way the drying steps can be avoided, which might be sometimes detrimental to the catalyst components morphology. This oil-slurry method is described in general in EP1489110 of the applicant, incorporated herein by reference.

As it can be seen from the above description of the semi-continuous or continuous process, it is thus possible to use separated reaction vessels for the different process steps and to transfer the reaction products which are prepared in the respective reaction vessels and to feed them in-line into further reaction vessels for formation of the emulsion and, subsequently, of the solidified particles.

It is preferred to use a full-continuous process as the time saving in said process is remarkable. In such fully continuous process, the formation of the solidified particles could be carried out in the temperature gradient line in the kind of pipe reactor, which is sufficiently long and which is subjected said temperature gradient from the starting temperature in the lower range of 20 to 80°C up to a "solidifying" temperature of 70 to 150°C. The temperature gradient is preferably obtained by means of heating the pipe reactor from the outside by applying normal heaters, microwaves, etc.

As mentioned before, a filtering unit might preferably be used for filtering the solidified particles from the solvent stream. For said filtering unit, various drums and sieving systems can be used, depending on the specific particle sizes.

The present invention also provides a process for polymerising olefins, as defined in claim 34. Preferably the olefins to be polymerised are olefins with 2 to 10 carbon atoms, in particular ethylene and/or propylene. Due to the use of the catalyst precursor in accordance with the present invention it is possible to control the MWD of the polymer produced to low values, of 3.9 or less, preferably 3.7 or less and more preferably 3.6 or less. MWD values of 3.3 to 3.5 and even as low as 3.0 are possible in accordance with the present invention by using the catalyst component and catalyst of the present invention. In embodiments of the present invention it is also possible to control the XS to low values, such as below 3 wt.-%, preferably below 2.5 wt.-%, and even below 2 wt.-%. XS values being even below 1.5 wt.-% are exemplified.

Finally the present invention also provides olefin polymers, as defined in claim 36. Preferably the olefins to be polymerised are olefins with 2 to 10 carbon atoms, in particular ethylene and/or propylene. Due to the use of the catalyst precursor in accordance with the present invention it is possible to control the MWD of the polymer produced, preferably a propylene homopolymer or copolymer, to low values, of 3.9 or less, preferably 3.7 or less and more preferably 3.6 or less. MWD values of 3.3 to 3.5 and even as low as 3.0 are possible in accordance with the present invention by using the catalyst component and catalyst of the present invention. In embodiments of the present invention it is also possible to control the XS to low values, such as below 3 wt.-%, preferably below 2.5 wt.-%, and even below 2 wt.-%. XS values being even below 1.5 wt.-% are exemplified.

Some preferred embodiments of the invention are described, by way of illustration, in the following examples.

In the examples the following measuring methods were used:

Melt Flow Rate, $MFR_2$: ISO 1133; 230 °C, 2,16 kg load
Xylene solubles, XS: Xylene soluble fraction of product at 25°C.

DETERMINATION OF XYLENE SOLUBLE FRACTION (XS)

2.0 g of polymer are dissolved in 250 ml p-xylene at 135 °C under agitation. After $30\pm2$ minutes the solution is allowed to cool for 15 minutes at ambient temperature and then allowed to settle for 30 minutes at $25\pm0.5$ °C . The solution is filtered with filter paper into two 100 ml flasks.

The solution from the first 100 ml vessel is evaporated in nitrogen flow and the residue is dried under vacuum at 90 °C until constant weight is reached.

$$XS\% = (100 \times m_1 \times v_0) \; / \; (m_0 \times v_1)$$

$m_0$ = initial polymer amount (g)
$m_1$ = weight of residue (g)
$v_0$ = initial volume (ml)
$v_1$ volume of analysed sample (ml)

Mw means weight average molecular weight and Mn is the number average molelecular weight determined in a known manner using size exclusion chromatograpy (SEC).

MWD means Mw/Mn, and is determined by said SEC method.

Ti and Mg amounts in catalyst components were measured by flame atomic absorption method.

**Examples**

Examples 1 - 3

Preparation of the Mg complex

A magnesium complex solution was prepared by adding, with stirring, 55.8 kg of a 20 % solution in toluene of BOMAG A to 19.4 kg 2-ethylhexanol in a 150 1 steel reactor. During the addition the reactor contents were maintained below 20°C. The temperature of the reaction mixture was then raised to 60 °C and held at that level for 30 minutes with stirring, at which time reaction was complete. 5.5 kg 1, 2-phthaloyl dichloride was then added and stirring of the reaction mixture at 60 °C was continued for another 30 minutes. After cooling to room temperature a yellow solution was obtained.

28, 4 g (25 mmol) of the obtained Mg complex was mixed with 0, 69 ml (7, 5 mmol) (example 1), 0, 23 ml (2, 5 mmol) (example 2) or 0, 46 ml (5, 0 mmol) (example 3) of $POCl_3$ and the obtained mixture 1, 2 or 3 was used in preparation of catalyst component.

Preparation of the catalyst component

19.5 ml titanium tetrachloride were placed in a 300 ml glass reactor equipped with a mechanical stirrer. Mixing speed was adjusted to 170 rpm. In examples 1, 2 and 3 , mixtures 1, 2 or 3 were added with stirring. 1.0 ml of a solution in toluene of 3.0 mg polydecene and 2.0 ml Viscoplex 1-254 were added to the stirred reaction mixture and the stirring was continued for 5 minutes. 10.0 ml n-heptane was added to the reaction mixture and stirring was continued additional 30 minutes. During the addition of the Mg-complex the reactor contents were maintained below 30°C.

The temperature of the reaction mixture was then slowly raised to 90°C over a period of 20 minutes and held at that level for 30 minutes with stirring. After settling and syphoning the solids underwent washing with 100 ml toluene, where 0, 11 ml of diethyl aluminium chloride (DEAC) was added, at 90°C for 30 minutes, 60 ml heptane for 20 minutes at 90°C and 60 ml pentane for 10 minutes at 25°C. Finally, the solids were dried at 60 °C by nitrogen purge, to yield a yellow, air-sensitive powder.
Catalyst component properties are disclosed in Table 1.

Example 4

Bulk polymerisation of propylene

The propylene bulk polymerisation was carried out in a stirred 5 1 tank reactor. About 0.9 ml triethyl aluminium (TEA) as a co-catalyst, ca 0.12 ml cyclohexyl methyl dimethoxy silane (CMMS) as an external donor and 30 ml n-pentane were mixed and allowed to react for 5 minutes. Half of the mixture was then added to the polymerisation reactor and the other half was mixed with about 20 mg of a catalyst component of example 1. After additional 5 minutes the catalyst/TEA/donor/n-pentane mixture was added to the reactor. The Al/Ti mole ratio was 250 mol/mol and the Al/CMMS mole ratio was 10 mol/mol. 70 mmol hydrogen and 1400 g propylene were introduced into the reactor and the temperature was raised within ca 15 minutes to the polymerisation temperature of 80°C. The polymerisation time after reaching polymerisation temperature was 60 minutes, after which the polymer formed was taken out from the reactor. Polymerisation results are disclosed in Table 2.

Example 5

Polymerisation was carried out as in example 4, but using the catalyst component prepared according to example 2.

Example 6

Polymerisation was carried out as in example 4, but using the catalyst component prepared according to example 3.

Example 7

Polymerisation was carried out as in example 6, but polymerisation temperature was 90 °C and as external donor was used bicyclopentyl dimethoxy silane.

Example 8

Preparation of Mg complex

Mg complex was prepared as in example 1, but no phosphorous compound was added to the complex.

Preparation of the catalyst component

19.5 ml titanium tetrachloride were placed in a 300 ml glass reactor equipped with a mechanical stirrer. Mixing speed was adjusted to 170 rpm. 28, 4 g (25 mmol) of the Mg-complex was added with stirring. 1.0 ml of a solution in toluene of 3.0 mg polydecene and 2.0 ml Viscoplex 1-254 were added to the stirred reaction mixture and stirring was continued 5 minutes. After addition of 10.0 ml n-heptane, 1, 36 ml (5 mmol) of tributyl phosphate (($BuO)_3PO$) was added and stirring was continued for 30 minutes. During the addition of the Mg-complex the reactor contents were maintained below 30°C The temperature of the reaction mixture was then slowly raised to 90°C over a period of 20 minutes and held at that level for 30 minutes with stirring. After settling and syphoning the solids underwent washing with 100 ml toluene, where 0, 11 ml of DEAC was added, at 90°C for 30 minutes, 60 ml heptane for 20 minutes at 90°C and 60 ml pentane for 10 minutes at 25°C. Finally, the solids were dried at 60 °C by nitrogen purge, to yield a yellow, air-sensitive powder.
Catalyst component properties are disclosed in Table 1.

Example 9

Bulk polymerisation of propylene

Polymerisation was carried out as in example 4, but using the catalyst component prepared according to example 8. Polymerisation results are disclosed in Table 2.

Example 10

Mg complex preparation

Mg complex was prepared as in example 8.

Catalyst component preparation

Catalyst component was prepared as in example 8, but tributyl phosphate compound was added first to the toluene wash together with DEAC.
Catalyst component properties are disclosed in Table 1.

Example 11

Bulk polymerisation of propylene

Polymerisation was carried out as in example 4, but using the catalyst component prepared according to example 10. Polymerisation results are disclosed in Table 2.

Comparative example (CE) (no P compound added)

Mg complex was prepared as in example 8 (no phosphorous compound was added to the complex).

Preparation of the catalyst component

Catalyst component was prepared as in example 8, but no phosphorous compound was added to the mixture.
Catalyst properties are disclosed in Table 1.
Polymerisation was carried out as in example 4, however, using catalyst component of the comparative example. Polymerisation results are given in Table 2.

**Table 1. Catalyst component properties**

| Example | P source | P / Mg (mol/mol) | Ti wt-% | DOP wt-% | Mg wt-% |
|---|---|---|---|---|---|
| 1 | POCl$_3$ | 0.3 | 4.96 | 23.5 | 12.3 |
| 2 | POCl$_3$ | 0.1 | 4.60 | 22.3 | 13.2 |
| 3 | POCl$_3$ | 0.2 | 4.47 | 22.4 | 13.3 |
| 8 | TBP | 0.2 | 2.57 | 22.0 | 14.9 |
| 10 | TBP | 0.2 | 4.41 | 22.4 | 13.3 |
| CE | no | 0 | 6.9 | 22.7 | 9.9 |
| TBP = tributyl phosphate the ratio P/Mg designates the molar ratio as used during preparation of catalyst component | | | | | |

**Table 2. Polymerisation and polymer results**

| Example | Cat.Comp of Example | Activity kg(PP)/g(cat) x h | XS % | MFR$_2$ g/10min | MWD |
|---------|---------------------|----------------------------|------|------------------|-----|
| 4 | 1 | 19.2 | 1.8 | 7.7 | 3.4 |
| 5 | 2 | 29.0 | 2.3 | 7.3 | 3.5 |
| 6 | 3 | 28.7 | 1.9 | 8.3 | 3.4 |
| 7 | 3 | 22.0 | 1.1 | 5.0 | 3.4 |
| 9 | 8 | 21.8 | 1.4 | 4.8 | 3.5 |
| 11 | 10 | 33.1 | 1.6 | 7.5 | 3.4 |
| CE | CE | 14.1 | 3.3 | 16.3 | 4.1 |

Example 12 (Comparative Example)

Mg complex preparation

Mg complex was prepared as in example 8.

Catalyst component preparation

Catalyst component was prepared as in example 10, however, no DEAC was added into the toluene wash solution, but only TBP was added (P/Mg mol/mol = 0, 2, the ratio P/Mg designates the molar ratio as used during preparation of catalyst component).
Catalyst component properties were as follows (wt-%) :

Ti 2,97
Mg 12,7
DOP 27,3
P 0,36

Example 13 (Comparative Example)

Bulk polymerisation of propylene

Polymerisation was carried out as in example 4, but using the catalyst component prepared according to example 12 and polymerisation temperature was 70 °C.
Polymerisation results:

Activity :27, 3
MFR$_2$ : 3,5
XS : 1,3
MWD : 3.9

Example 14

Mg complex was prepared as in example 8.
Catalyst component was prepared as in example 10, but as phosphorous compound was used 1, 31 g of tri phenyl phosphine.
P/Mg molar ratio as used during catalyst component preparation: 0, 2
Catalyst component properties (wt-%) :
Ti 5, 5
DOP 20, 0
Mg 10, 1

Example 15

Polymerisation was carried out as in example 4 using the catalyst component of example 14.
Polymerisation results:
Activity: 22, 5
$MFR_2$: 9, 7
XS: 2, 6
MWD: 3, 3

**Claims**

1.  Process for preparing an olefin polymerization catalyst component in the form of particles having a predetermined size range of 5 to 200 $\mu$m, said process comprising the steps of:

    a) preparing a solution of a complex of a Group 2 metal and an electron donor by reacting a compound of said metal with said electron donor or a precursor thereof in an organic liquid reaction medium;
    b) adding said solution of said complex to at least one compound of a transition metal to produce an emulsion the dispersed phase of which contains more than 50 mol% of the Group 2 metal in said complex;
    c) agitating the emulsion in order to maintain the droplets of said dispersed phase within such an average size range of 5 to 200$\mu$m;
    d) solidifying said droplets of the dispersed phase
    e) recovering the solidified particles of the olefin polymerization catalyst component;

    wherein a phosphorous compound is added before recovering the solidified particles in step e), and
    wherein during the catalyst component preparation a compound of Group 13, preferably a compound of aluminium having a general formula $AlR_{3-n}X_n$, wherein R stands for a straight chain or branched alkyl or alkoxy group having 1 to 20, preferably 1 to 10 and more preferably 1 to 6 carbon atoms, X independently represents a residue selected from the group of halogen, preferably chloride, and alkyl and n stands for 0, 1, 2 or 3, is added and brought into contact with the droplets of the dispersed phase of the agitated emulsion before recovering the solidified particles in step e).

2.  The process of claim 1, wherein, in step c), the emulsion is agitated in the presence of an emulsion stabilizer and/or a turbulence minimizing agent (TMA).

3.  The process of claim 1 or 2, further comprising washing said solidified particles prior to recovering in step e).

4.  A process according to any preceding claim wherein the phosphorous compound is added before recovering the solidified particles in step e) in an amount so that a molar ratio of phosphorous to Group 2 metal of 0.1 to 0.5 is obtained.

5.  A process according to claim 3 or 4 wherein the phosphorous compound is brought into contact with the solidified particles during the washing step.

6.  A process according to any preceding claim wherein the phosphorous compound comprises phosphorous in the oxidation state +3 or +5.

7.  A process according to any of the preceding claims, wherein the phosphorous compound is a compound of the formula $O=P(OR)_3$ wherein the three residues R may be identical or different and may be selected among alkyls, alkenyls, aryls, phenyls with 1 to 20 C-atoms, preferably 1 to 16, more preferably 1 to 12 C-atoms, wherein the groups optionally may be substituted once or twice, preferably with any of the groups identified above and halogens, including Cl, Br, and I.

8.  A process according to any preceding claim wherein said Group 2 metal is magnesium.

9.  A process according to any preceding claim wherein said lorganic liquid medium comprises a $C_6$-$C_{10}$ aromatic hydrocarbon or a mixture of $C_6$-$C_{10}$ aromatic hydrocarbon and $C_5$-$C_8$ aliphatic hydrocarbons.

10. A process according to any preceding claim wherein said liquid reaction medium comprises toluene.

11. A process according to any preceding claim wherein said electron donor is a mono- or diester of an aromatic carboxylic acid or diacid.

12. A process according to claim 11 wherein said aromatic carboxylic acid ester or diester is formed in situ by reaction of an aromatic carboxylic acid chloride or diacid dichloride with a $C_2$-$C_{16}$ alkanol and/or diol.

13. A process according to claim 11 or 12 wherein said aromatic carboxylic acid ester is diethylhexyl phthalate.

14. A process according to any preceding claim wherein the preparation of the Group 2 metal complex is carried out at a temperature of 20°C to 80°C.

15. A process according to 14 wherein the Group 2 metal is magnesium and the preparation of the magnesium complex is carried out at a temperature of 50°C to 70°C.

16. A process according to any preceding claim wherein said transition metal is a Group 4 metal, a Group 5 metal and/or a Group 6 metal or is Cu, Fe, Co, Ni and/or Pd or mixtures thereof.

17. A process according to claim 16 wherein said transition metal is a Group 4 metal, preferably titanium.

18. A process according to any of claims 16 or 17 wherein said compound of the transition metal is a halide.

19. A process according to any preceding claim wherein the mol ratio of the transition metal metal/ Group 2 metal of said disperse phase is 20 to 80.

20. The process according to claim 19 wherein the mol ratio of the transition metal/ Group 2 metal of said disperse phase is 45 to 75.

21. The process according to any preceding claim wherein said Group 2 metal complex and said transition metal compound are reacted at a temperature of 10°C to 60°C.

22. A process according to claim 21 wherein said Group 2 metal complex is a magnesium complex and said transition metal compound is a Group 4 metal compound which are reacted in a temperature range from 20°C to 50°C.

23. A process according to any preceding claim wherein said emulsion is composed of a first dispersed phase which is a toluene/$TiCl_4$-insoluble-oil having a Group 4 metal/Mg mol ratio greater than 0.1 and less than 10 and a second disperse phase which is an oil less dense than that of the dispersed phase and which has a Group 4 metal/Mg mol ratio of 10 to 100.

24. A process according to claim 23 wherein the Group 4 metal/Mg mol ratio of said dispersed denser oil is 2 to 4 and that of the disperse phase oil is 55 to 65.

25. A process according to any of claims 2 to 24 wherein said emulsion stabilizer is a surfactant.

26. A process according to claim 25 wherein said surfactant comprises an acrylic polymer and/or methacrylic polymer.

27. A process according to any of claims 2 to 26 wherein a turbulence minimizing agent is added to the reaction mixture before solidifying said droplets of the dispersed phase, said TMA being inert and soluble in the reaction mixture under the reaction conditions.

28. A process according to claim 27 wherein the turbulence minimizing agent is selected from polymers of octene, nonene, decene, undecene, dodecene, copolymers or mixtures of polymers thereof, preferably polydecene.


**Patentansprüche**

1. Verfahren zum Herstellen einer Katalysatorkomponente zur Polymerisation von Olefinen in der Form von Partikeln, die einen vorbestimmten Größenbereich von 5 bis 200 µm besitzen, wobei besagtes Verfahren die folgenden Schritte umfasst:

a). Herstellen einer Lösung eines Komplexes eines Gruppe-2-Metalls und eines Elektronendonors durch Umsetzen einer Verbindung von besagtem Metall mit besagtem Elektronendonor, oder einem Precursor davon, in einem organischen, flüssigen Reaktionsmedium;

b) Zugeben von besagter Lösung von besagtem Komplex zu mindestens einer Verbindung eines Übergangsmetalls, um eine Emulsion herzustellen, deren dispergierte Phase mehr als 50 mol% des Gruppe-2-Metalls in besagtem Komplex enthält;

c) Rühren der Emulsion, um die Tropfen der besagten dispergierten Phase innerhalb eines solchen mittleren Größenbereichs von 5 bis 200 $\mu$m zu erhalten;

d) Verfestigen der besagten Tropfen der dispergierten Phase;

e) Erhalten der verfestigten Partikel der Katalysatorkomponente zur Polymerisation von Olefinen;

wobei eine phosphorhaltige Verbindung zugegeben wird, bevor die verfestigten Partikel in Schritt e) erhalten werden, und

wobei, während der Herstellung der Katalysatorkomponente, eine Verbindung der Gruppe 13, bevorzugt eine Verbindung von Aluminium, die die allgemeine Formel $AlR_{3-n}X_n$ besitzt, wobei R für eine geradkettige oder verzweigte Alkyl- oder Alkoxygruppe steht, die 1 bis 20, bevorzugt 1 bis 10, und mehr bevorzugt 1 bis 6 Kohlenstoffatome besitzt, wobei X unabhängig einen Rest darstellt, der ausgewählt ist aus der Gruppe aus Halogen, bevorzugt Chlorid, und Alkyl, und n für 0, 1, 2 oder 3 steht, zugegeben wird, und in Kontakt gebracht wird mit den Tropfen der dispergierten Phase der gerührten Emulsion vor dem Erhalten der verfestigten Partikel in Schritt e).

2. Verfahren nach Anspruch 1, wobei in Schritt c) die Emulsion in Gegenwart eines Emulsionsstabilisators und/oder eines Mittels zur Minimierung von Turbulenzen (turbulence minimizing agent (TMA)) gerührt wird.

3. Verfahren nach Anspruch 1 oder 2, weiter umfassend das Waschen von besagten verfestigten Partikeln vor dem Erhalten in Schritt e).

4. Verfahren gemäß einem der vorhergehenden Ansprüche, wobei die phosphorhaltige Verbindung vor Erhalten der verfestigten Partikel in Schritt e) in einer Menge zugegeben wird, dass ein molares Verhältnis von Phosphor zum Gruppe-2-Metall von 0, 1 bis 0, 5 erhalten wird.

5. Verfahren gemäß Anspruch 3 oder 4, wobei die phosphorhaltige Verbindung mit den verfestigten Partikeln während dem Schritt des Waschens in Kontakt gebracht wird.

6. Verfahren gemäß einem der vorhergehenden Ansprüche, wobei die phosphorhaltige Verbindung Phosphor in der Oxidationsstufe +3 oder +5 umfasst.

7. Verfahren gemäß einem der vorhergehenden Ansprüche, wobei die phosphorhaltige Verbindung eine Verbindung der Formel $O=P(OR)_3$ ist, wobei die drei Reste R identisch oder verschieden voneinander sein können, und ausgewählt sein können aus Alkyl-, Alkenyl-, Aryl-, Phenyl-Resten mit 1 bis 20 C-Atomen, bevorzugt 1 bis 16, mehr bevorzugt 1 bis 12 C-Atomen, wobei die Gruppen optional einfach oder zweifach substituiert sein können, bevorzugt mit irgendeiner der Gruppen, wie oben angezeigt, und Halogenen, beinhaltend Cl, Br und I.

8. Verfahren gemäß einem der vorhergehenden Ansprüche, wobei besagtes Gruppe-2-Metall Magnesium ist.

9. Verfahren gemäß einem der vorhergehenden Ansprüche, wobei besagtes organisches, flüssiges Medium einen aromatischen $C_6$-$C_{10}$ Kohlenwasserstoff oder eine Mischung aus aromatischem $C_6$-$C_{10}$ Kohlenwasserstoff und aliphatischen $C_5$-$C_8$ Kohlenwasserstoffen umfasst.

10. Verfahren gemäß einem der vorhergehenden Ansprüche, wobei besagtes flüssiges Reaktionsmedium Toluol umfasst.

11. Verfahren gemäß einem der vorhergehenden Ansprüche, wobei besagter Elektronendonor ein Mono- oder Diester einer aromatischen Karbonsäure oder Dikarbonsäure ist.

12. Verfahren gemäß Anspruch 11, wobei besagter aromatischer Karbonsäureester oder Diester *in situ* gebildet wird durch die Umsetzung eines aromatischen Karbonsäurechlorids oder Dikarbonsäuredichlorids mit einem $C_2$-$C_{16}$ Alkanol und/oder Diol.

**13.** Verfahren gemäß Anspruch 11 oder 12, wobei besagter aromatischer Karbonsäureester Diethylhexylphthalat ist.

**14.** Verfahren gemäß einem der vorhergehenden Ansprüche, wobei die Herstellung des Gruppe-2-Metall Komplexes bei einer Temperatur von 20°C bis 80°C durchgeführt wird.

**15.** Verfahren gemäß Anspruch 14, wobei das Gruppe-2-Metall Magnesium ist und die Herstellung des Magnesium Komplexes bei einer Temperatur von 50°C bis 70°C durchgeführt wird.

**16.** Verfahren gemäß einem der vorhergehenden Ansprüche, wobei besagtes Übergangsmetall ein Gruppe-4-Metall, ein Gruppe-5-Metall und/oder ein Gruppe-6-Metall ist, oder Cu, Fe, Co, Ni und/oder Pd oder Mischungen davon ist.

**17.** Verfahren gemäß Anspruch 16, wobei besagtes Übergangsmetall ein Gruppe-4-Metall, bevorzugt Titan, ist.

**18.** Verfahren gemäß einem der Ansprüche 16 oder 17, wobei besagte Verbindung des Übergangsmetalls ein Halogenid ist.

**19.** Verfahren gemäß einem der vorhergehenden Ansprüche, wobei das Molverhältnis des Übergangmetalls/Gruppe-2-Metalls von besagter dispergierten Phase 20 bis 80 ist.

**20.** Verfahren gemäß Anspruch 19, wobei das Molverhältnis des Übergangsmetalls/Gruppe-2-Metalls von besagter dispergierten Phase 45 bis 75 ist.

**21.** Verfahren gemäß einem der vorhergehenden Ansprüche, wobei besagter Gruppe-2-Metallkomplex und besagte Übergangsmetallverbindung bei einer Temperatur von 10°C bis 60°C umgesetzt werden.

**22.** Verfahren gemäß Anspruch 21, wobei besagter Gruppe-2-Metallkomplex ein Magnesium Komplex ist, und besagte Übergangsmetallverbindung eine Gruppe-4-Metallverbindung ist, die in einem Temperaturbereich von 20°C bis 50°C umgesetzt werden.

**23.** Verfahren gemäß einem der vorhergehenden Ansprüche, wobei besagte Emulsion zusammengesetzt ist aus einer ersten dispergierten Phase, die ein Toluol/TiCl$_4$-unlösliches Öl ist, das ein Gruppe-4-Metall / Mg Molverhältnis von größer als 0, 1 und weniger als 10 besitzt, und einer zweiten dispergierten Phase, die ein Öl ist, das eine geringere Dichte aufweist als das der dispergierten Phase, und das ein Gruppe-4-Metall / Mg Molverhältnis von 10 bis 100 besitzt.

**24.** Verfahren gemäß Anspruch 23, wobei das Gruppe-4-Metall / Mg Molverhältnis von besagtem dispergiertem dichterem Öl 2 bis 4 ist und das des Öls der dispergierten Phase 55 bis 65 ist.

**25.** Verfahren gemäß einem der Ansprüche 2 bis 24, wobei besagter Emulsionsstabilisator ein Tensid ist.

**26.** Verfahren gemäß Anspruch 25, wobei besagtes Tensid ein acrylisches Polymer und/oder methacrylisches Polymer umfasst.

**27.** Verfahren gemäß einem der Anspruch 2 bis 26, wobei das Mittel zur Minimierung von Turbulenzen (turbulence minimizing agent (TMA)) zu der Reaktionsmischung zugegeben wird, bevor besagte Partikel der dispergierten Phase verfestigt werden, wobei besagtes TMA inert ist und löslich in der Reaktionsmischung unter den Reaktionsbedingungen.

**28.** Verfahren gemäß Anspruch 27, wobei das Mittel zur Minimierung von Turbulenzen (turbulence minimizing agent (TMA)) ausgewählt ist aus Polymeren von Octen, Nonen, Decen, Undecen, Dodecen, Copolymeren oder Mischungen von Polymeren davon, bevorzugt Polydecen.

**Revendications**

**1.** Procédé de préparation d'un composant de catalyseur de polymérisation d'oléfine, sous la forme de particules ayant une gamme de taille prédéfinie de 5 à 200 $\mu$m, ledit procédé comprenant les étapes consistant à :

a) préparer une solution d'un complexe d'un métal du Groupe 2 et d'un donneur d'électrons en faisant réagir un composé dudit métal avec ledit donneur d'électrons ou un précurseur de celui-ci dans un milieu réactionnel liquide organique ;

b) ajouter ladite solution dudit complexe à au moins un composé d'un métal de transition pour produire une émulsion dont la phase dispersée contient plus de 50 % en moles du métal du Groupe 2 dans ledit complexe ;

c) agiter l'émulsion afin de maintenir les gouttelettes de ladite phase dispersée dans une telle gamme de taille moyenne de 5 à 200 $\mu$m ;

d) solidifier lesdites gouttelettes de la phase dispersée ;

e) récupérer les particules solidifiées du composant de catalyseur de polymérisation d'oléfine ;

dans lequel on ajoute un composé de phosphore avant de récupérer les particules solidifiées à l'étape e), et dans lequel pendant la préparation du composant de catalyseur, on ajoute et on met en contact un composé du Groupe 13, de préférence un composé d'aluminium répondant à la formule générale $AlR_{3-n}X_n$, dans laquelle R correspond à un groupe alkyle ou alcoxy à chaîne droite ou ramifiée ayant 1 à 20, de préférence 1 à 10 et mieux encore 1 à 6 atomes de carbone, X représente indépendamment un résidu choisi dans le groupe des halogènes, de préférence un chlorure, et des groupes alkyle, et n correspond à 0, 1, 2 ou 3, avec les gouttelettes de la phase dispersée de l'émulsion agitée avant de récupérer les particules solidifiées à l'étape e) .

2. Procédé selon la revendication 1, dans lequel, à l'étape c), l'émulsion est agitée en présence d'un stabilisateur d'émulsion et/ou d'un agent minimisant les turbulences (TMA).

3. Procédé selon la revendication 1 ou 2, comprenant en outre le lavage desdites particules solidifiées avant la récupération de l'étape e).

4. Procédé selon n'importe quelle revendication précédente dans lequel on ajoute le composé de phosphore avant de récupérer les particules solidifiées à l'étape e) en une quantité telle qu'on obtient un rapport molaire du phosphore au métal du Groupe 2 de 0,1 à 0,5.

5. Procédé selon la revendication 3 ou 4 dans lequel on met en contact le composé de phosphore avec les particules solidifiées, au cours de l'étape de lavage.

6. Procédé selon n'importe quelle revendication précédente dans lequel le composé de phosphore comprend du phosphore dans l'état d'oxydation +3 ou +5.

7. Procédé selon n'importe lesquelles des revendications précédentes, dans lequel le composé de phosphore est un composé de formule $O=P(OR)_3$ dans laquelle les trois résidus R peuvent être identiques ou différents et peuvent être choisis parmi les groupes alkyle, alcényle, aryle, phényle avec 1 à 20 atomes C, de préférence 1 à 16, mieux encore 1 à 12 atomes C, ces groupes pouvant éventuellement être substitués une ou deux fois, de préférence par n'importe lesquels des groupes identifiés ci-dessus et des halogènes, incluant Cl, Br, et I.

8. Procédé selon n'importe quelle revendication précédente dans lequel ledit métal du Groupe 2 est le magnésium.

9. Procédé selon n'importe quelle revendication précédente dans lequel ledit milieu liquide organique comprend un hydrocarbure aromatique en $C_6$-$C_{10}$ ou un mélange d'hydrocarbures aromatiques en $C_6$-$C_{10}$ et d'hydrocarbures aliphatiques en $C_5$-$C_8$.

10. Procédé selon n'importe quelle revendication précédente dans lequel ledit milieu réactionnel liquide comprend du toluène.

11. Procédé selon n'importe quelle revendication précédente dans lequel ledit donneur d'électrons est un mono- ou diester d'un acide ou diacide carboxylique aromatique.

12. Procédé selon la revendication 11 dans lequel ledit ester ou diester d'acide carboxylique aromatique est formé in situ par réaction d'un chlorure d'acide ou dichlorure de diacide carboxylique aromatique avec un alcanol et/ou diol en $C_2$-$C_{16}$.

13. Procédé selon la revendication 11 ou 12 dans lequel ledit ester d'acide carboxylique aromatique est le phtalate de diéthylhexyle.

**14.** Procédé selon n'importe quelle revendication précédente dans lequel la préparation du complexe du métal du Groupe 2 est effectuée à une température de 20 °C à 80 °C.

**15.** Procédé selon la revendication 14 dans lequel le métal du Groupe 2 est le magnésium et la préparation du complexe de magnésium est effectuée à une température de 50 °C à 70 °C.

**16.** Procédé selon n'importe quelle revendication précédente dans lequel ledit métal de transition est un métal du Groupe 4, un métal du Groupe 5 et/ou un métal du Groupe 6 ou est Cu, Fe, Co, Ni et/ou Pd ou des mélanges de ceux-ci.

**17.** Procédé selon la revendication 16 dans lequel ledit métal de transition est un métal du Groupe 4, de préférence le titane.

**18.** Procédé selon n'importe lesquelles des revendications 16 ou 17 dans lequel ledit composé du métal de transition est un halogénure.

**19.** Procédé selon n'importe quelle revendication précédente dans lequel le rapport molaire du métal de transition/métal du Groupe 2 de ladite phase dispersée est de 20 à 80.

**20.** Procédé selon la revendication 19 dans lequel le rapport molaire du métal de transition/métal du Groupe 2 de ladite phase dispersée est de 45 à 75.

**21.** Procédé selon n'importe quelle revendication précédente dans lequel ledit complexe du métal du Groupe 2 et ledit composé du métal de transition sont mis à réagir à une température de 10 °C à 60 °C.

**22.** Procédé selon la revendication 21 dans lequel ledit complexe du métal du Groupe 2 est un complexe de magnésium et ledit composé du métal de transition est un composé de métal du Groupe 4, qui sont mis à réagir dans une plage de température de 20 °C à 50 °C.

**23.** Procédé selon n'importe quelle revendication précédente dans lequel ladite émulsion est composée d'une première phase dispersée qui est une huile insoluble dans $TiCl_4$/toluène ayant un rapport molaire du métal du Groupe 4/Mg supérieur à 0,1 et inférieur à 10, et d'une seconde phase dispersée qui est une huile moins dense que celle de la phase dispersée et qui a un rapport molaire du métal du Groupe 4/Mg de 10 à 100.

**24.** Procédé selon la revendication 23 dans lequel le rapport molaire du métal du Groupe 4/Mg de ladite huile plus dense dispersée est de 2 à 4 et celui de l'huile de la phase dispersée est de 55 à 65.

**25.** Procédé selon n'importe lesquelles des revendications 2 à 24 dans lequel ledit stabilisateur d'émulsion est un tensioactif.

**26.** Procédé selon la revendication 25 dans lequel ledit tensioactif comprend un polymère acrylique et/ou un polymère méthacrylique.

**27.** Procédé selon n'importe lesquelles des revendications 2 à 26 dans lequel on ajoute un agent minimisant les turbulences au mélange réactionnel avant de solidifier lesdites gouttelettes de la phase dispersée, ledit TMA étant inerte et soluble dans le mélange réactionnel dans les conditions réactionnelles.

**28.** Procédé selon la revendication 27 dans lequel l'agent minimisant les turbulences est choisi parmi les polymères d'octène, de nonène, de décène, d'undécène, de dodécène, les copolymères ou mélanges de polymères de ceux-ci, de préférence le polydécène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0155230 A
- EP 713886 A
- EP 856013 A
- WO 0008073 A
- WO 0008074 A
- EP 926165 A
- EP 83074 A
- EP 83073 A
- WO 03000757 A
- WO 2004029112 A
- US 5413979 A
- US 4294948 A
- US 6767857 B1
- WO 0132718 A
- EP 06011312 A
- EP 1489110 A

### Non-patent literature cited in the description

- Nomenclature of Inorganic Chemistry. *IUPAC,* 1989
- Römpps Chemie-Lexicon. Franckh'sche Verlagshandlung, W. Keller & Co, 1973, 1831